Europäisches Patentamt

European Patent Office

Office européen des brevets

(19)

(11) Numéro de publication: **0 045 341**
**B1**

(12) FASCICULE DE BREVET EUROPEEN

(45) Date de publication du fascicule du brevet:
09.05.84

(51) Int. Cl.³: **F 16 B 13/12, F 24 D 19/02**

(21) Numéro de dépôt: 80870037.1

(22) Date de dépôt: **31.07.80**

(54) Dispositif d'accrochage à rallonge.

(43) Date de publication de la demande:
**10.02.82 Bulletin 82/6**

(45) Mention de la délivrance du brevet:
**09.05.84 Bulletin 84/19**

(84) Etats contractants désignés:
**AT BE CH DE FR GB IT LI LU NL**

(56) Documents cités:
**BE - A - 875 916**
**CH - A - 501 195**
**CH - A - 517 922**
**DE - A - 2 138 246**
**DE - A - 2 163 297**
**DE - A - 2 745 277**
**DE - B - 1 903 589**
**DE - U - 6 812 064**
**DE - U - 7 702 415**
**FR - A - 2 416 375**

(73) Titulaire: **Koekkelkoren, Joséphine, quai Marcellis 1A/091, Liège (BE)**
Titulaire: **Gregorovic, Mathilde, 242 Southlands Road, Bickley-Bromley Kent (GB)**

(72) Inventeur: **Gregorovic, Dragutin, décédé (BE)**

(74) Mandataire: **Kellens, Georges E., c/o BUGNION S.A. rue de Namur 43 -Bte 3, B-1000 Bruxelles (BE)**

ACTORUM AG

## Description

La présente invention est relative à un dispositif d'accrochage à placer dans un mur ou autres parois qui, dans sa forme la plus élaborée, est destiné à être utilisé comme support-console plus particulièrement pour les éléments de radiateur et/ou encore tuyauteries et câbles.

On connaît déjà par le brevet belge No 656476, au nom du titulaire, des dispositifs d'accrochage constitués généralement par un feuillard replié en forme tubulaire fendu sur toute sa longueur, de manière à présenter une certaine élasticité et comportant — réalisés par estampage — un certain nombre d'aspérités, trous et autres découpes.

Ce type de dispositif a été amélioré ensuite par le titulaire en vue d'améliorer encore la tenue de dispositif d'accrochage dans le mur, et ce comme décrit, par exemple dans le brevet belge No 875916, en prévoyant un moyen d'expansion complémentaire que l'on amène dans une zone de la partie entrante du dispositif, zone intérieurement rétrécie, ramenée dans un cercle intérieur de diamètre inférieur au diamètre normal intérieur de la partie entrante du dispositif, en certains points ou lignes, formant bossages, de sorte que les points ou lignes, bossages mitoyens aux premiers, vont s'ouvrir vers l'extérieur, c'est-à-dire qu'ils vont être amenés hors d'un cercle extérieur de diamètre supérieur à la partie entrante du dispositif, et cela sous l'effet de ce moyen complémentaire d'expansion.

La présente invention remédie à certains inconvénients des dispositifs décrits ci-dessus et, plus particulièrement, en améliorant encore la tenue du dispositif d'accrochage dans le mur ou autres parois; en outre, elle assure le positionnement du dispositif en empêchant qu'il se produise un déplacement lorsque l'on ramène le moyen d'expansion complémentaire vers la zone de points ou lignes rétrécis. Finalement, selon l'invention, on pourvoit le dispositif à sa partie extérieure (non entrante) d'un moyen, rallonge éventuelle ou adapteur de diamètre.

Selon l'invention, le dispositif d'accrochage à placer dans un mur ou autres parois, de forme tubulaire à diamètre variable sur sa longueur, fendu et à épaisseur constante sur toute sa longueur, présentant du côté interne de sa partie entrante une zone de lignes de bossages, susceptibles d'être forcées vers l'extérieur par un moyen complémentaire d'expansion radiale amené par enfoncement dans cette zone après le placement du dispositif d'accrochage dans le trou, est caractérisé en ce que le moyen complémentaire d'expansion est d'une longueur au plus égale à la longueur de la zone de lignes de bossages 2, 3, et en ce qu'il comporte une partie de diamètre sensiblement plus grand que celui de la partie entrante, située au-delà de sa partie entrante, vers l'extérieur, partie formée par un évasement vers l'extérieur, droit incliné ou arrondi, faisant avec la partie entrante en angle non nul inférieur ou égal à 90°, partie de diamètre sensiblement plus grand que celui de la partie entrante, formant butée à l'enfoncement du dispositif dans le trou, dispositif dont la partie extérieure au mur est aménagée elle-même en support ou est susceptible de recevoir un dispositif de support.

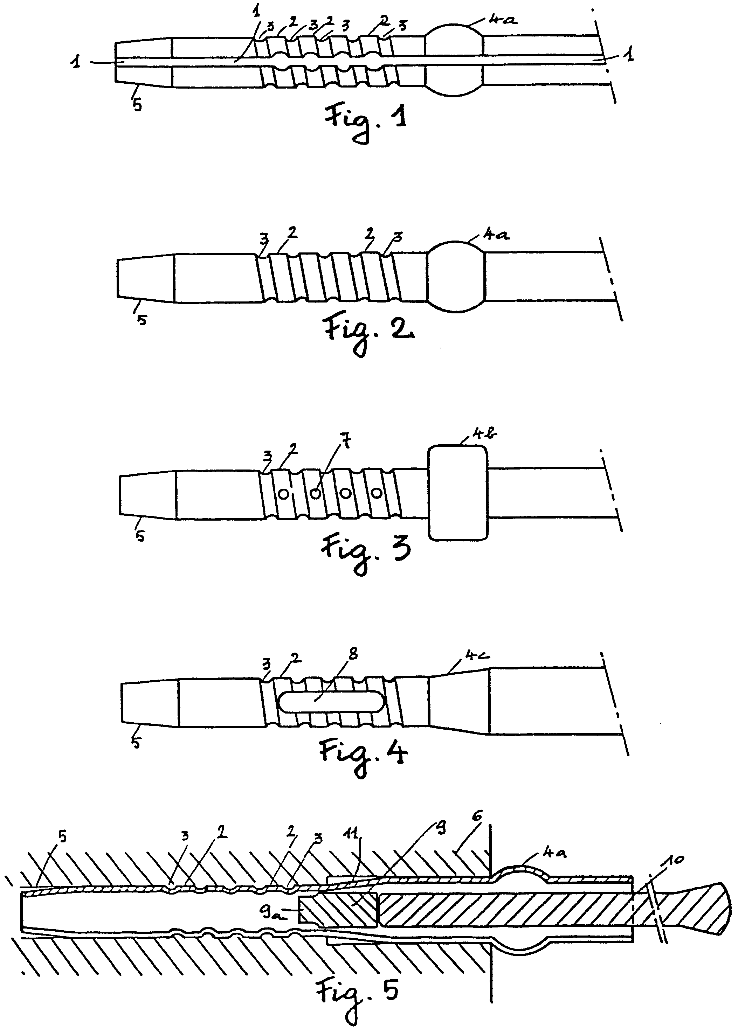

Afin de mieux comprendre l'invention, on la décrit maintenant par rapport à un dessin qui représente à titre d'exemple à la fig. 1 une vue partielle de profil d'un dispositif selon l'invention;

à la fig. 2, une vue partielle de profil du même dispositif qu'à la fig. 1, mais du côté opposé;

à la fig. 3, une vue partielle de profil d'une autre forme de réalisation d'un dispositif conforme à l'invention;

à la fig. 4, une vue partielle de profil d'une autre forme de réalisation d'un dispositif conforme à l'invention;

à la fig. 5, une vue en coupe longitudinale d'une autre forme de réalisation d'un dispositif conforme à l'invention, le dispositif étant montré introduit dans le trou du mur, mais avant l'enfoncement complet du moyen complémentaire d'expansion;

à la fig. 6, une vue en coupe longitudinale d'une autre forme de réalisation d'un dispositif conforme à l'invention, le dispositif étant montré introduit dans le trou d'un mur, après l'enfoncement complet du moyen complémentaire d'expansion et muni d'une rallonge et de son moyen de fixation;

à la fig. 7, une vue de face du moyen de fixation visible à la fig. 6;

à la fig. 8, une vue en coupe longitudinale d'une autre forme de réalisation d'un dispositif conforme à l'invention, le dispositif étant montré introduit dans le trou d'un mur, après l'enfoncement complet du moyen complémentaire d'expansion et muni d'une rallonge et d'un moyen de fixation différent de celui montré aux fig. 6 et 7;

à la fig. 9, une vue de profil du moyen de fixation visible à la fig. 8.

En se référant à ces différentes figures, on a représenté des dispositifs d'accrochage de forme générale tubulaire, ayant tous une fente longitudinale (fig. 1) dans la partie entrante, une zone de bossages, incrustations à estampage de parties hautes 2 et de parties basses 3, mitoyennes, qui, comme représentées, sont l'empreinte d'un pas de vis, à lignes hautes 2 et basses 3, dispositifs pourvus à l'extrémité vers l'extérieur de leur partie entrante d'une butée de limitation d'enfoncement: soit 4a une boursouflure extérieure arrondie, soit 4b une boursouflure extérieure à pan droit, soit 4c un évasement vers l'extérieur, qui va entraîner un diamètre supérieur du dispositif après la butée.

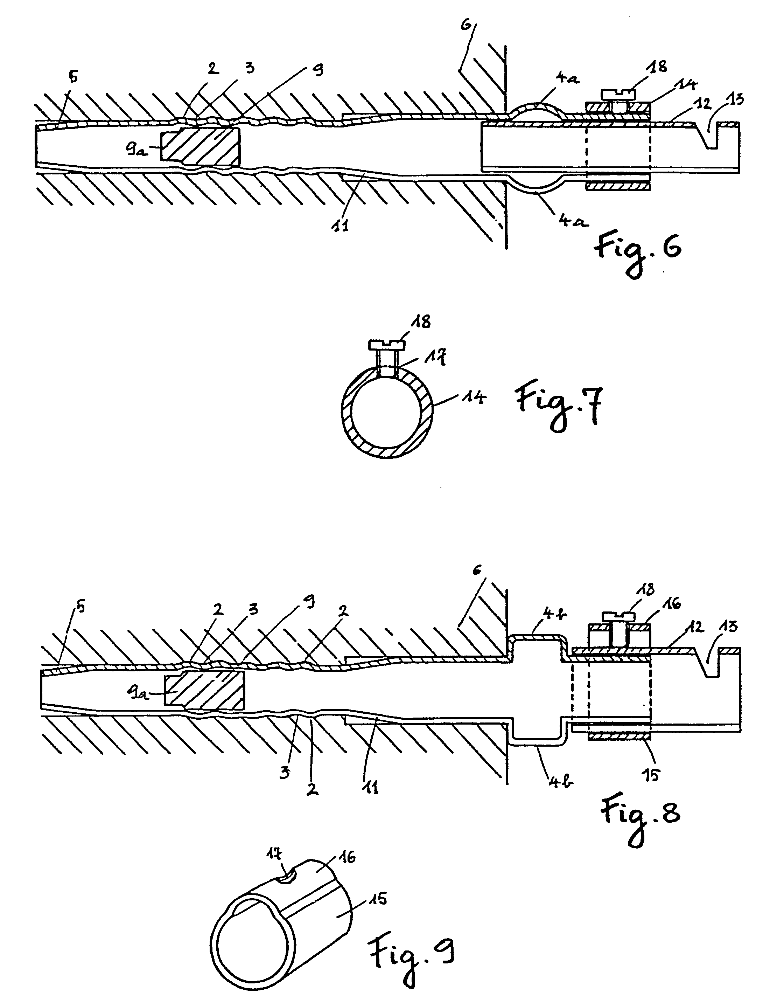

De préférence, comme on peut le voir, l'extrémité vers l'intérieur du dispositif présente un évasement à conicité 5 vers l'intérieur, facilitant l'introduction du dispositif dans le trou du mur 6. La zone des bossages 2, 3 peut, pour en augmenter sa flexibilité et faciliter sa sortie vers l'extérieur des parties hautes 2, être pourvue de découpes, trous 7, placés sur les lignes basses 3 fig. 3, ou encore on peut prévoir une (ou plusieurs) fenêtre(s) longitudinale(s) 8 (fig. 4).

C'est dans cette zone de bossages 2, 3 que l'on va pousser le moyen complémentaire d'expansion 9 et faire sortir vers l'extérieur les lignes hautes 2;

l'enfoncement du moyen complémentaire peut se réaliser par un outil enfonceur 10, sur lequel on va frapper à l'aide d'un marteau.

Il faut noter que l'on ne va amener le moyen complémentaire d'expansion 9 dans la zone des bossages 2, 3 qu'après que le dispositif lui-même a été placé dans le trou du mur 6. Les butées 4a, b, c, étant plus particulièrement destinées à éviter que, lorsque l'on procède à la mise en place du moyen d'expansion complémentaire 9, il y ait un enfoncement supplémentaire du dispositif lui-même dans le trou du mur 6.

Comme il est visible sur les fig. 5, 6 et 8, on a prévu un dispositif présentant un évasement 11 vers l'extérieur, qui ne se situe pas à l'extrémité de la partie entrante du dispositif, mais avant celle-ci; cette disposition est particulièrement utile pour la parfaite tenue du dispositif dans le trou d'un mur 6 et pour qu'il y ait un contact parfait sur toute la longueur de la partie entrante du dispositif et la paroi du trou, alors que celui-ci présente généralement un diamètre supérieur, plus on s'éloigne de son fond et particulièrement à sa sortie.

Toutefois, comme on peut le voir aux fig. 5, 6 et 8, le dispositif est muni à l'extrémité vers l'extérieur de sa partie entrante d'un moyen de limiter son enfoncement dans le mur, moyen que l'on a représenté du type boursouflure vers l'extérieur, arrondies 4a (fig. 5 et 6) à pan droit 4b (fig. 8).

Comme on le voit aux fig. 6 et 8, on a muni sa partie restant à l'extérieur du trou d'une rallonge 12 qui, suivant qu'elle est placée dans (fig. 6) ou sur (fig. 8) le dispositif, est d'un diamètre inférieur ou supérieur au diamètre de la partie restant à l'extérieur du dispositif, rallonge 12 qui sert donc éventuellement d'adaptateur de diamètre.

Cette rallonge 12 fait office de support et est, par exemple, comme représentée, pourvue d'une fente 13 dans laquelle peut reposer et/ou être maintenue l'extrémité d'un élément radiateur (non représenté).

Cependant, on peut également aménager directement la partie restant à l'extérieur du trou du mur 6 en support et y prévoir une fente 13. De plus, des aménagements de différents types connus peuvent être prévus sur cette partie restant à l'extérieur du dispositif et/ou la rallonge 12, s'il y en a une.

De préférence, pour fixer la rallonge 12 sur ou dans le dispositif, on prévoit une bague de serrage (fig. 6 et 7), un collier 14 de forme annulaire ou, encore, aux fig. 8 et 9, un collier 15 rond à l'exception d'un renflement vers l'extérieur 16; dans l'un comme dans l'autre cas, le collier 14, 15 est pourvu d'un trou 17 aménagé en pas de vis 16; comme représenté, on prévoit une vis de serrage 18; toutefois, dans le cas d'un collier 15 à renflement 16, on peut obtenir le resserrage par déformation du collier 15 au moyen d'un outil en forme de L (non représenté) dont on introduit la branche courte dans le trou 17 du collier 15; par une pression suffisamment sérieuse sur l'autre branche, on déforme le collier 15.

Si l'on prévoit d'utiliser une vis de serrage 18, on peut prévoir un trou de passage, soit sur le dispositif lui-même, soit sur la rallonge, de manière que la vis 18 s'appuie directement ou sur la rallonge 12 ou sur le dispositif lui-même.

Il ne s'agit toutefois pas d'une disposition obligatoire, on peut en effet obtenir un serrage suffisant sans trou, et cela en fonction du matériau utilisé pour le dispositif et pour la rallonge, qui peut être du type tôle de feuillard, et, dans ce cas, le trou n'est généralement pas nécessaire, ou encore en acier, n'offrant pratiquement aucune possibilité de déformation; dans ce cas, on peut même être amené à prévoir un deuxième trou en regard du premier dans, suivant le cas, la rallonge 12 ou le dispositif et permettant le passage de la vis 18.

Bien entendu, on peut prévoir une série de trous à pas de vis ou non.

Il est avantageux que le collier 14, 15 ne soit pas positionné d'avance, ni par rapport au dispositif, ni, plus particulièrement, par rapport à la rallonge 12, ce qui serait le cas si l'on utilise un trou de passage de la vis 18; on peut en effet, dans le cas contraire, avancer ou reculer sans aucune contrainte la rallonge 12 dans ou sur le dispositif.

On peut prévoir un moyen complémentaire d'expansion 9 comme représenté, se terminant vers l'avant par un rétrécissement 9a facilitant son introduction, alors même que sa partie essentielle s'inscrit dans un cercle de diamètre très proche de celui du diamètre de la partie entrante du dispositif avant évasement éventuel 11. Ce moyen complémentaire d'expansion 9 (non représenté) peut comporter en son centre un conduit droit fileté permettant de retirer ce moyen complémentaire par vissage.

## Revendications

1. Dispositif d'accrochage et moyen complémentaire d'expansion radiale, à placer dans le trou d'un mur ou autres parois, dispositif d'accrochage de forme tubulaire, fendu et à épaisseur constante sur toute sa longueur, mais à diamètre variable sur sa longueur, présentant du côté interne de sa partie entrante une zone de lignes de bossages (2, 3) susceptibles d'être forcées vers l'extérieur par le moyen complémentaire d'expansion radiale (9) amené par enfoncement dans cette zone (2, 3) après le placement du dispositif d'accrochage dans le trou, caractérisé en ce que le moyen d'expansion (9) est d'une longueur au plus égale à la longueur de la zone de lignes de bossages (2, 3), et en ce que le dispositif d'accrochage comporte, en outre, au-delà de sa partie entrante et vers l'extérieur au moins une partie (4a, 4b, 4c) de diamètre sensiblement plus grand que celui de la partie entrante et formée par un évasement vers l'extérieur, évasement faisant avec la partie entrante un angle non nul inférieur ou égal à 90° et formant butée à l'enfoncement du dispositif dans le trou, butée arrondie (4a), droite (4b) ou inclinée (4c), et en ce que le dispositif comporte une partie extérieure au mur (6), c'est-à-dire au-delà de la partie formant butée, qui est aménagée en support ou est susceptible de recevoir un dispositif de support.

2. Dispositif d'accrochage selon la revendication 1, caractérisé en ce que la zone de lignes de bossages internes (2, 3) est réalisée par des incrustations par estampage de parties hautes (2) et de parties basses (3) mitoyennes et représentant l'empreinte d'un pas de vis à lignes hautes (2) et basses (3).

3. Dispositif d'accrochage selon la revendication 2, caractérisé en ce que la zone de lignes de bossages (2, 3) est garnie de trous (7) ou d'une ou plusieurs fenêtres longitudinales (8).

4. Dispositif d'accrochage selon l'une quelconque des revendications 1 à 3, caractérisé en ce qu'il comporte une seconde zone d'évasement (11) vers l'extérieur sur sa partie entrante, entre la zone de lignes de bossages (2, 3) et l'évasement formant butée (4a, 4b, 4c).

5. Dispositif d'accrochage selon l'une quelconque des revendications 1 à 3, caractérisé en ce qu'une rallonge tubulaire (12) est placée dans ou sur la partie extérieure au mur (6) du dispositif et est soit d'un diamètre inférieur (fig. 6) ou supérieur (fig. 8) au diamètre de la partie extérieure au mur (6) du dispositif.

6. Dispositif d'accrochage selon la revendication 5, caractérisé en ce que la rallonge tubulaire (12) est fixée sur ou dans la partie extérieure au mur (6) du dispositif au moyen d'une bague de serrage ou d'un collier (14 ou 15), de forme annulaire, ou d'un collier (15) annulaire à l'exception d'un renflement (16).

7. Dispositif d'accrochage selon la revendication 6, caractérisé en ce que le collier (14 ou 15) est pourvu d'un trou (17).

8. Dispositif d'accrochage selon la revendication 7, caractérisé en ce que le trou (17) du collier (14 ou 15) est aménagé pour recevoir une vis de serrage (18).

9. Dispositif d'accrochage selon l'une des revendications 1 à 8, caractérisé en ce que le moyen complémentaire d'expansion (9) s'inscrit dans un cercle de diamètre très proche de celui du diamètre de la partie entrante du dispositif avant évasement éventuel (11), à l'exception éventuellement d'une partie terminale avant rétrécie (9a).

**Patentansprüche**

1. Aufhängevorrichtung und ergänzendes radiales Weitungsmittel zum Einsetzen in das Loch einer Wand oder Wandung, wobei die Aufhängevorrichtung als Rohr mit auf seiner Länge veränderlichem Durchmesser ausgebildet und über seine gesamte Länge geschlitzt ist sowie eine konstante Dicke besitzt und auf ihrer Innenseite vom Eingangsabschnitt eine Zone von Buckellinien (2, 3) aufweist, die durch das radiale Weitungsmittel (9) nach aussen gedrängt werden können, das nach dem Einbringen der Aufhängevorrichtung in das Loch in diese Zone (2, 3) eingetrieben wird, dadurch gekennzeichnet, dass das Weitungsmittel eine Länge besitzt, die höchstens gleich ist der Länge der Zone der Buckellinien (2, 3), dass die Aufhängevorrichtung einen zusätzlichen Abschnitt (4a, 4b, 4c) besitzt, der einen Durchmesser hat, der merklich grösser ist als der des Eingangsabschnitts und der über seinen Eingangsabschnitt hinausgehend nach aussen liegt, wobei der Abschnitt aus einer nach aussen gehenden Ausweitung oder Schwellung gebildet ist, die mit dem Eingangsabschnitt einen nicht Null Grad betragenden Winkel bildet, der unter oder gleich 90° ist und beim Eintreiben der Vorrichtung in das Loch einen Anschlag bildet, der entweder gerundet (4a) ist, senkrecht (4b) verläuft oder geneigt (4c) ist, und dass die Vorrichtung einen ausserhalb der Wand (6) liegenden, d.h. über den den Anschlag bildenden Abschnitt hinausgehenden Teil aufweist, der als Träger ausgebildet ist oder zur Aufnahme einer tragenden Enrichtung geeignet ist.

2. Aufhängevorrichtung nach Anspruch 1, dadurch gekennzeichnet, dass die Zone der inneren Buckellinien (2, 3) durch hohlprägendes Eindrükken der zwischenliegenden Erhebungen (2) und Vertiefungen (3) ausgebildet ist und einen Abdruck eines Gewindegangs mit erhabenen und versenkten Linien ergibt.

3. Vorrichtung nach Anspruch 2, dadurch gekennzeichnet, dass die Zone der Buckellinien (2, 3) mit Löchern (7) oder mit einem bzw. mehreren Längsfenstern (8) versehen ist.

4. Vorrichtung nach einem der vorhergehenden Ansprüche 1 bis 3, dadurch gekennzeichnet, dass sie eine zweite Zone einer trompetenförmigen Ausbauchung (11) aufweist, die auf ihrem Eingangsabschnitt nach aussen verläuft und zwischen der Zone der Buckellinien (2, 3) und der als Anschlag dienenden Schwellung (4a, 4b, 4c) liegt.

5. Vorrichtung nach einem der vorhergehenden Ansprüche 1 bis 3, dadurch gekennzeichnet, dass ein rohrförmigen Ansatzstück (12) in oder auf den ausserhalb der Wand (6) liegenden Abschnitt der Vorrichtung gesetzt wird, wobei das Ansatzstück bzw. die Verlängerung (12) einen gegenüber dem Durchmesser des ausserhalb der Wand (6) liegenden Abschnitts der Vorrichtung kleineren (Fig. 6) oder grösseren Durchmesser (Fig. 8) hat.

6. Vorrichtung nach Anspruch 5, dadurch gekennzeichnet, dass das rohrförmige Ansatzstück (12) auf oder an dem ausserhalb der Wand (6) liegenden Abschnitt mittels einer Spannbandschraube (18) oder einer Schelle (14, 15) befestigt ist, die als Ringflansch (15) mit einer Ausbauchung (16) ausgebildet ist.

7. Vorrichtung nach Anspruch 6, dadurch gekennzeichnet, dass die Schelle oder der Ringflansch (14 oder 15) mit einem Loch (17) versehen ist.

8. Vorrichtung nach Anspruch 7, dadurch gekennzeichnet, dass das Loch (17) des Ringflanschen oder der Schelle (14, 15) so beschaffen ist, dass es eine Spannbandschraube aufnehmen kann.

9. Vorrichtung nach einem der vorhergehenden Ansprüche 1 bis 8, dadurch gekennzeichnet, dass das ergänzende Weitungsmittel (9) sich als Inkreis dem Durchmesser des Eingangsabschnitts vor der etwaigen trompetenförmigen Ausbauchung (11) mit Ausnahme gegebenenfalls des vor der Verengung (9a) liegenden Abschnitts sehr nahe anlegt.

## Claims

1. Suspending device and supplementary means of radial expansion to be placed in a hole in a wall or other partition, a tubular suspending device, split and of constant thickness over its full length but of variable diameter over its length, having on the inside of the area of entry a zone of embossment lines (2, 3) which can be forced outwards by the supplementary radial expansion facility (9) introduced by penetration into this area (2, 3) after insertion of the suspending device into the hole, characterized by the fact that the expansion facility (9) is of a length of the zone of the lines of embossment (2, 3), and by the fact that the suspending device also incorporates beyond the recessed part towards the outside at least one part (4a, 4b, 4c) of apparently larger diameter than that of the area of entry, formed by a widening out towards the exterior, such widening out forming an angle greater than nothing with the zone of entry, less than or equal to ninety degrees, and forming a collar against penetration by the device into the hole, a rounded (4a), straight (4b) or inclined (4c) collar, and by the fact that the device includes a part exterior to the wall (6), that is to say beyond the part forming the collar, which is arranged as a support or is capable of being fitted with a support device.

2. Suspending device in accordance with claim 1, characterized by the fact that the area of internal embossment lines (2, 3) is created by stamped projecting facings (2) and low intermediate areas (3) and representing the path of a screw thread with high (2) and low (3) lines.

3. Suspending device in accordance with claim 2, characterized by the fact that the area of embossment lines (2, 3) has holes (7) or one or more longitudinal windows (8).

4. Suspending device in accordance with any of claims 1 to 3, characterized by the fact that it comprises a second zone (11) widening outwards in its area of entry between the zone of embossment lines (2, 3) and the widening zone forming the collar (4a, 4b, 4c).

5. Suspending device in accordance with any of the claims 1 to 3, characterized by the fact that a tubular extension piece (12) is placed in or on the part of the device outside the wall (6) having the diameter smaller (fig. 6) or greater (fig. 8) than that of the part of the device outside the wall (6).

6. Suspending device in accordance with claim 5, characterized by the fact that the tubular extension piece (12) is fitted onto or into the part of the device outside the wall (6) by means of a compression ring or ring-shaped collar (14 or 15), or a collar (15) which is ring-shaped except for a bulge (16).

7. Suspending device in accordance with claim 6, characterized by the fact that the collar (14 or 15) has a hole (17).

8. Suspending device in accordance with claim 7, characterized by the fact that the hole (17) in the collar (14 or 15) is arranged to receive a tightening screw (18).

9. Suspending device in accordance with any one of the claims 1 to 8, characterized by the fact that the supplementary expansion facility (9) is described within a circle of diameter very close to that of the entry to the device possibly having an enlargement of bore (11), with the possible exception of a final front narrow part (9a).

Fig. 1

Fig. 2

Fig. 3

Fig. 4

Fig. 5

7

Fig. 6

Fig. 7

Fig. 8

Fig. 9